(19) Europäisches Patentamt
European Patent Office
Office européen des brevets

(11) Numéro de publication : **0 531 194 A1**

(12) **DEMANDE DE BREVET EUROPEEN**

(21) Numéro de dépôt : **92402368.2**

(51) Int. Cl.[5] : **G06F 12/14**

(22) Date de dépôt : **31.08.92**

(30) Priorité : **03.09.91 FR 9110886**

(43) Date de publication de la demande :
**10.03.93 Bulletin 93/10**

(84) Etats contractants désignés :
**DE ES GB IT**

(71) Demandeur : **GEMPLUS CARD INTERNATIONAL**
**avenue du Pic de Bretagne, Parc d'activités de la Plaine de Jouques**
**F-13420 Gemenos (FR)**

(72) Inventeur : **Viricel, Gilles, Cabinet BALLOT-SCHMIT**
**7, rue Le Sueur**
**F-75116 Paris (FR)**

(74) Mandataire : **Schmit, Christian Norbert Marie et al**
**Cabinet Ballot-Schmit 7, rue Le Sueur**
**F-75116 Paris (FR)**

(54) **Procédé d'authentification de données.**

(57) L'invention concerne un procédé d'authentification de données tel qu'on peut en avoir besoin par exemple pour authentifier une carte à puce (10) avant d'autoriser un appareil de transaction (20) à délivrer un service au titulaire de cette carte.

Dans le cas où l'authentification consiste à vérifier qu'un contenu d'information est bien présent dans la carte à une adresse déterminée d'une mémoire (16) de la carte, on propose selon l'invention de rendre la longueur du bloc d'informations paramétrable et d'inclure dans l'algorithme de cryptage de ce bloc une donnée relative à cette longueur ; l'adresse logique du fichier qui contient le bloc et la position du bloc dans le fichier sont également utilisées. D'autre part, on effectue de préférence un algorithme récursif en N étapes : on décompose le bloc à authentifier en tranches de longueur fixe, et à chaque étape on utilise comme donnée à crypter la fonction OU-Exclusif d'une tranche considérée et du résultat de l'étape précédente.

FIG_3

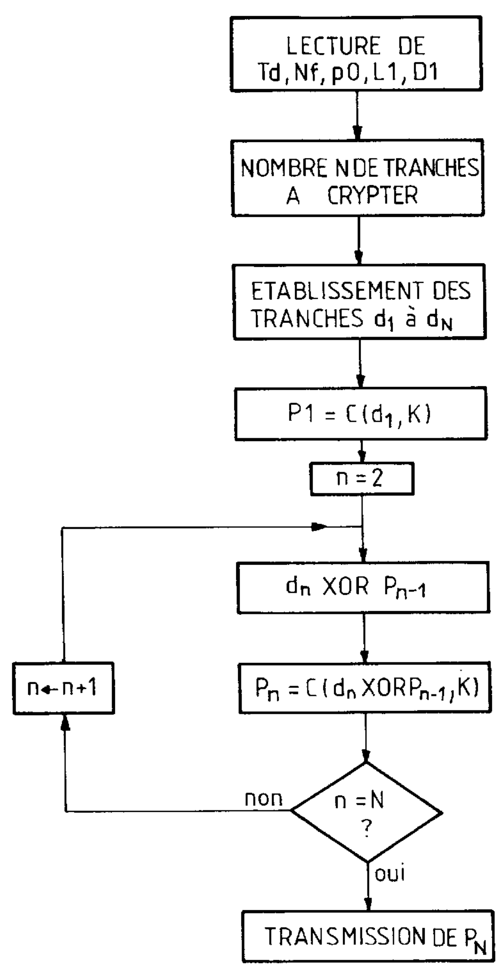


EP 0 531 194 A1

L'invention concerne la sécurité du traitement d'informations numériques, et plus précisément elle concerne un nouveau procédé permettant d'authentifier des données binaires contenues dans un fichier.

Par l'expression "procédé d'authentification", on entend ici une opération de traitement de signal par laquelle on vérifie qu'un ensemble de données recherchées à un certain endroit est bien l'ensemble que l'on attend; si c'est le cas on émet une autorisation (pour l'exécution d'autres opérations); si ce n'est pas le cas, on émet une interdiction.

Les procédés d'authentification électronique sont de plus en plus nécessaires au fur et à mesure de l'accroissement de l'utilisation de l'électronique dans la vie courante. L'authentification électronique peut être utilisée pour permettre à une personne autorisée d'accéder à des informations confidentielles ou à des locaux réservés, ou pour permettre des transactions ayant directement une valeur fiduciaire à partir d'un compte personnel, etc.

On utilise en particulier de plus en plus des cartes à puces électroniques pour fournir des services; des procédés d'authentification sont nécessaires pour vérifier que la carte est bien habilitée à fournir tel ou tel service et que le titulaire est bien habilité à utiliser cette carte. On décrira ci-dessous l'invention à partir d'une carte à puce pour faciliter la compréhension, mais l'invention n'est pas limitée à ce cas.

Les exemples de procédés d'authentification qui vont être donnés ci-après sont décrits à titre d'exemple pour montrer la variété des situations possibles dans lesquelles l'invention qui sera exposée ensuite peut trouver son application.

Dans le cas d'une carte à puce, par exemple, on utilise fréquemment le schéma d'authentification suivant : la carte contient dans une mémoire interne non volatile un code confidentiel qui est spécifique du titulaire de la carte et que lui seul connaît. La carte est insérée dans un lecteur qui est couplé à un clavier d'introduction de données. Le titulaire de la carte introduit au clavier son code confidentiel; celui-ci est transmis à la carte. Une comparaison est effectuée dans la carte et le fonctionnement ultérieur n'est autorisé que si le code introduit correspond au code confidentiel en mémoire.

C'est là un premier niveau d'authentification : vérification de l'habilitation du titulaire.

Un deuxième niveau peut consister à vérifier que la carte est bien habilitée à effectuer la transaction que le lecteur va effectuer avec elle. La carte contient alors, dans une autre zone de mémoire non volatile, une clé secrète K1 d'un algorithme de cryptage C(D, K) où C est une fonction d'une donnée D et d'une clé K. Contrairement au code confidentiel personnel que le titulaire a besoin de connaître, la clé K n'est pas connue du titulaire.

Le lecteur de carte envoie une donnée quelconque D1 à la carte; la carte contient dans sa mémoire le programme de cryptage C(D,K). Elle crypte la donnée D1 à l'aide de la clé secrète K1, c'est-à-dire qu'elle exécute la fonction C(D1, K1); et elle renvoie le résultat R1 au lecteur qui, pendant ce temps, a crypté la même donnée D1 avec le même algorithme de cryptage C(D,K) et avec une clé K2 qu'il a dans sa mémoire et qui doit en principe correspondre à K1. Les résultats R1 et R2 des cryptages sont comparés. S'il y correspondance, c'est que la bonne clé K1 est présente dans la carte à puce. Sinon, le fonctionnement n'est pas autorisé. La correspondance peut être une identité de R1 et R2, mais elle peut être aussi une relation prédéterminée qui n'est pas une identité.

Dans un autre procédé d'authentification donné à titre d'exemple, l'algorithme C(D,K) utilisé dans la carte pour obtenir le résultat R1 n'est pas le même que celui qui est utilisé dans le lecteur pour obtenir le résultat R2. Par exemple, l'algorithme de la carte est un algorithme de cryptage C(D1,K1) aboutissant à un résultat R1. L'algorithme contenu dans le lecteur est un algorithme de décryptage permettant de retrouver D1 à partir de R1, noté D(R,K). On peut utiliser un algorithme de type connu (RSA) qui a la propriété suivante : une seule clé K2, différente de K1, est capable de décrypter le résultat R1 crypté avec la clé K1. C'est-à-dire que pour chaque clé K1, une seule clé K2 est telle que si C(D1,K1) = R1, alors D(R1,K2) = D1. Le traitement électronique est alors le suivant : le lecteur envoie une donnée D1 à la carte. La carte crypte cette donnée avec l'algorithme C(D,K) en utilisant sa clé interne K1; elle envoie le résultat R1 au lecteur. Le lecteur exécute sur ce résultat l'algorithme de décryptage D(R1,K2). Le résultat est comparé avec la donnée D1 initialement envoyée par le lecteur. S'il n'y a pas identité, c'est que la clé contenue dans la carte n'était pas la bonne. Dans ce cas, on vérifie donc non pas l'identité de deux clés de cryptage mais la correspondance entre une clé de cryptage K1 et la seule clé de décryptage K2 qui lui correspond. Une grande sécurité est obtenue avec ce système, tout spécialement dans le cas de l'utilisation de l'algorithme RSA qui est tel que la connaissance de la clé de cryptage ne permet pas de calculer la clé inverse de décryptage et réciproquement, de sorte que l'une des deux clés peut ne pas être protégée.

Pour augmenter la sécurité de ces procédés, la donnée D1 envoyée par le lecteur est une donnée aléatoire, de sorte qu'on ne peut pas tirer des conséquences de tentatives successives infructueuses d'authentification.

Les paragraphes qui précèdent se réfèrent à l'authentification d'une carte par la présence d'une clé secrète qui réside dans la carte. Mais on peut envisager aussi qu'une partie du contenu de la mémoire de la carte doive être authentifié sans que ce contenu soit autorisé à transiter en clair sur la liaison entre la carte et le lecteur de carte. Dans ce cas, on peut envisager par exemple qu'un algorithme de cryptage à clé secrète C(D,K) soit effectué en utilisant comme clé secrète K une clé contenue dans la carte et comme donnée D une information contenue dans la carte plutôt que (ou en plus de) une donnée envoyée par le lecteur de carte.

Dans ce cas, il faut bien entendu que le programme contenu dans la carte et qui exécute l'algorithme connaisse l'emplacement où trouver l'information à authentifier. Cet emplacement est désigné soit par une adresse physique soit par une adresse logique dans un fichier.

On a donc proposé d'authentifier l'information à l'aide d'un algorithme de cryptage utilisant comme clé une clé secrète contenue dans la carte et comme donnée plusieurs données qui sont notamment le contenu de l'information attendue, l'adresse physique ou logique où elle devrait être, et éventuellement la donnée (par exemple aléatoire) envoyée par le lecteur de carte.

De manière pratique, les informations que l'on certifie ainsi sont des données de longueur constante, par exemple un mot de quatre octets pour l'information à certifier, un mot pour l'adresse, un mot pour la donnée aléatoire.

Un but de l'invention est d'augmenter les possibilités du procédé d'authentification de manière qu'une même carte à puce (dans le cas des cartes à puces) puisse être utilisée dans un plus grand nombre d'applications, et par conséquent qu'une même carte puisse contenir des informations à authentifier qui sont de nature très différente.

Selon l'invention, on propose un procédé d'authentification qui utilise des données à authentifier sous forme d'un bloc de données contenu à un emplacement déterminé d'un fichier déterminé, et un programme de cryptage faisant intervenir comme donnée à crypter l'adresse logique du fichier contenant le bloc de données, la position et la longueur du bloc de données dans le fichier et le contenu proprement dit du bloc de données.

Ceci permet d'authentifier l'information quelle que soit sa taille et non pas seulement une information de taille fixée à l'avance. On obtient donc une plus grande souplesse d'emploi puisqu'on pourra utiliser une même carte pour des applications très différentes nécessitant l'authentification de blocs d'informations de taille paramétrable en fonction de l'application.

Pour les programmes de cryptage qui utilisent des données de longueur constante, on utilise l'information sur la taille du bloc de données à crypter pour décomposer en N tranches de longueur constante l'information à crypter; et on effectue un cryptage pour chaque tranche. Le programme de cryptage prend donc en compte la taille du bloc pour permettre un cryptage quelle que soit cette taille.

Dans un mode de mise en oeuvre avantageuse de l'invention, le programme de cryptage utilise un algorithme C(D,K) à clé secrète K, qui est exécuté itérativement de la manière suivante :

- le bloc d'informations à authentifier est décomposé en tranches de taille déterminée, la tranche de rang n étant désignée par $d_j$;
- l'algorithme de cryptage C(D,K), est exécuté de manière itérative sur des données qui font intervenir à une étape n la tranche $D_n$ et le résultat $P_{n-1}$ de l'exécution de l'algorithme à l'étape précédente n-1.

De préférence, à chaque étape, l'algorithme de cryptage est exécuté sur une donnée qui est une combinaison logique simple, de préférence un OU-Exclusif, de la tranche $d_n$ et du résultat $P_{n-1}$ de l'exécution de l'algorithme à l'étape précédente.

Une étape de l'exécution itérative sera de préférence l'exécution de l'algorithme sur une tranche de données qui comporte entre autres l'adresse logique du fichier contenant le bloc, ainsi que la position et la longueur du bloc de données.

En pratique c'est la première étape de l'exécution itérative qui est exécutée sur les données citées cidessus et éventuellement sur une donnée issue de l'application (en général une donnée issue du lecteur de carte dans le cas d'une carte à puce, et de préférence une donnée aléatoire). Remarque : dans tous les cas, l'adresse logique du fichier, la position et la longueur du bloc sont transmis à la carte dans l'instruction et ne sont pas écrites dans la carte.

D'autres caractéristiques et avantages de l'invention apparaîtront à la lecture de la description détaillée qui suit et qui est faite en référence aux dessins annexés dans lesquels :

- la figure 1 représente un exemple de système utilisant une carte à mémoire contenant des données à authentifier;
- la figure 2 représente sous forme schématique la décomposition du bloc d'informations qui va servir à l'authentification
- la figure 3 représente un organigramme du programme de cryptage permettant l'authentification.

L'invention va être décrite à propos d'un exemple particulier; cet exemple ne doit pas être considéré comme limitatif étant donné la grande variété des situations possibles, comme on l'a montré dans le préambule de cette demande de brevet.

Sur la figure 1, on a représenté une carte à mémoire 10 comportant essentiellement un microprocesseur MP, des mémoires associées à ce microprocesseur, et les circuits d'interface IF nécessaires à la communication entre la carte et l'extérieur.

Parmi les mémoires associées aux microprocesseur on trouvera en général une mémoire vive de travail 12 (RAM), une mémoire morte de programmes 14 (ROM) et une mémoire non volatile 16 (EPROM ou EEPROM), inscriptible et éventuellement effaçable électriquement.

La mémoire 16 est de préférence divisée en plusieurs zones dont certaines sont lisibles de l'extérieur et d'autres ne le sont pas (et sont lisibles seulement par le microprocesseur pour ses besoins propres). Elle peut être aussi divisée en zones inscriptibles et zones non inscriptibles. Quand une zone est non inscriptible, cela veut dire qu'une inscription a été mise à un moment donné et que l'accès en écriture a été ensuite condamné par des moyens physiques ou logiques.

La carte est destinée à communiquer avec un appareil de transaction 20 dont la finalité est de délivrer des services au titulaire de la carte lorsque celui-ci introduit sa carte dans l'appareil. On ne décrira pas le fonctionnement de l'appareil pour ce qui est de la délivrance des services, l'objet de l'invention étant limité à ce qui concerne l'authentification de la carte par l'appareil; les services, quels qu'ils soient, ne sont délivrés qu'après une authentification réussie de la carte.

L'appareil de transaction 20 comporte évidemment un circuit d'interface IF' capable de communiquer avec le circuit d'interface correspondant de la carte 10. L'appareil comporte en outre de préférence des moyens de traitement de signal analogues à ceux de la carte, c'est-à-dire un microprocesseur MP', une mémoire vive de travail 22, une mémoire morte de programmes 24, éventuellement une mémoire non volatile 26. Toutefois, ces moyens peuvent être remplacés par un microordinateur ou l'équivalent, capable de communiquer avec la carte selon un protocole déterminé (à travers l'interface IF') pour échanger des informations avec elle.

Dans l'exemple décrit ici, on va supposer que l'authentification de la carte nécessite la vérification du contenu d'une zone Z1 à un emplacement déterminé de la mémoire non volatile 16 de la carte. L'appareil de transaction va vérifier qu'un bloc d'informations B1 bien déterminé est présent à cet emplacement. Et bien entendu, cette vérification doit s'opérer sans faire transiter en clair les informations entre la carte et le lecteur.

La zone de mémoire Z1 est supposée inaccessible en lecture comme en écriture par l'extérieur de la carte; elle est toutefois accessible en lecture par le microprocesseur pour certaines opérations bien déterminées figées dans les programmes contenus dans la mémoire morte ROM 14 ou la mémoire EEPROM 16.

L'appareil de transaction 20 élabore une donnée aléatoire D1 qu'il envoie à la carte. Il envoie également l'adresse logique du fichier et, selon l'invention, la taille et la position du bloc de données B1 à authentifier (taille évaluée en nombres d'octets ou en nombre de mots par exemple).

En utilisant un algorithme de cryptage C(D,K) contenu dans sa mémoire morte de programmes, la carte va exécuter un cryptage du bloc d'informations et le transmettre à l'appareil de transaction. De son côté, l'appareil de transaction va effectuer (dans cet exemple de réalisation) le même cryptage sur les mêmes informations.

La carte utilise pour le cryptage une clé secrète K qui est dans une zone de mémoire Z2 inaccessible en lecture comme en écriture. Seul le microprocesseur peut aller accéder à cette zone, et cela seulement pendant l'exécution de l'opération de cryptage C(D,K). La zone de mémoire Z2 fait partie (en principe) de la mémoire non volatile 16.

Selon l'invention, la donnée D sur laquelle est effectué le cryptage à clé secrète K comprend d'une part le bloc d'informations à authentifier, et d'autre part une donnée représentant la taille et la position de ce bloc et l'adresse logique du fichier le contenant; elle peut comprendre aussi la donnée aléatoire D1 transmise par le lecteur.

Etant donné que le bloc d'informations a une taille qui peut être variable puisque c'est là un des intérêts principaux de l'invention, il est souhaitable d'utiliser un algorithme de cryptage qui ne soit pas gêné par le fait que la taille est variable. C'est pour cela qu'on utilise selon l'invention la taille du bloc B1, fournie par le système à la carte, pour tenir compte dans le programme de cryptage de cette taille.

Les algorithmes de cryptage classiques tels que l'algorithme DES travaillent sur des données de dimension fixe et établissent des résultats de dimension fixe.

Pour permettre le cryptage avec ce type d'algorithme on prévoit de préférence de décomposer le bloc de données à authentifier en tranches de taille fixe, et d'exécuter une opération de cryptage en plusieurs étapes, en nombre suffisant pour traiter toutes les tranches.

Selon une particularité de l'invention on propose d'effectuer à chaque étape une opération de cryptage non pas sur chaque tranche du bloc à authentifier mais sur une combinaison logique simple d'une tranche déterminée et du résultat de l'opération exécutée à l'étape précédente. La combinaison logique est de préférence un OU-Exclusif.

En d'autres termes, la carte décompose le bloc de données à authentifier en N tranches de dimension fixe dont le contenu est $d_n$ pour la nième tranche. L'algorithme de cryptage C(D,K), exécuté à l'étape n fournit un résultat $P_n$.

Dans ce cas, on effectue à chaque étape le calcul suivant :

$$P_n = C(d_n \text{ Xor } P_{n-1}, K)$$

l'expression ($d_n$ Xor $P_{n-1}$) représente la combinaison OU-Exclusif de $d_n$ et $P_{n-1}$.

Bien entendu, à la première étape, n est égal à 1 et il n'y a pas de résultat précédent $P_{n-1}$; on peut effectuer le calcul directement sur la première tranche de données $d_1$. Alors,

$$P_1 = C(d_1, K)$$

De préférence, la première tranche de données comportera les caractéristiques logiques permettant d'identifier la position et la taille du fichier, ainsi que l'adresse logique du fichier et éventuellement le nombre aléatoire D1 fourni par l'application. Ces caractéristiques comprennent donc la série d'indications suivantes :

- Td : type du répertoire dans lequel se trouve le fichier de données contenant le bloc B1; par exemple un octet;
- Nf : numéro du fichier dans ce répertoire; par exemple un octet;
- p0 : position du bloc d'informations B1 par rapport au début de fichier; par exemple un octet
- L1 longueur du bloc B1; par exemple un octet;
- D1 donnée aléatoire fournie par l'appareil de transaction; par exemple 4 octets.

La première tranche comporte donc par exemple 8 octets :

$$d_1 = Td, Nf, p0, L1, D1$$

Les autres tranches seront les portions successives de 8 octets du bloc d'informations B1.

L'opération OU-Exclusif conserve la longueur des tranches du découpage.

Comme les algorithmes de cryptage usuels (DES, RSA) fournissent des résultats qui sont de même taille que la donnée cryptée, la suite d'étapes itératives porte à chaque fois sur des données de même longueur.

Dans l'exemple décrit plus précisément ici, on utilisera pour C(D,K) l'algorithme DES publié par le National Bureau of Standards des Etats Unis d'Amérique; une description détaillée peut être obtenue auprès de cet organisme ou dans la publication "Federal Register" vol 40 N° 52 (17 mars 1975) et vol 40 N°149 (1er Août 1975).

En résumé, le programme de cryptage contenu dans la mémoire morte 14 de la carte va faire exécuter par le microprocesseur d'abord un découpage du bloc d'informations à crypter (bloc B1 + informations d'adresse, de position et de taille + donnée aléatoire D1) en N tranches; puis il va effectuer le cryptage itératif proprement dit en tenant compte du nombre de tranches évalué précédemment.

Le résultat final $P_N$ de la succession d'étapes récursives décrite plus haut est transmis à l'appareil de transaction. Le même calcul est effectué par cet appareil et les résultats sont comparés pour l'authentification de la carte.

L'organigramme de la figure 3 schématise les étapes essentielles du programme d'authentification contenu dans la mémoire morte 14 de la carte et exécuté par le microprocesseur MP dès que l'appareil 20 a transmis les informations nécessaires.

On a ainsi décrit une solution originale permettant d'utiliser une longueur de bloc variable pour l'authentification d'un élément tel qu'une carte à mémoire. La solution décrite empêche l'authentification si le bloc d'information n'a pas les caractéristiques logiques attendues (position, taille, et adresse logique du fichier) et le contenu attendu.

## Revendications

1. Procédé d'authentification qui utilise des données à authentifier sous forme d'un bloc (B1) de données contenu à un emplacement déterminé d'un fichier déterminé d'une mémoire (16), et un programme de cryptage (C(D,K)) faisant intervenir comme donnée (D) à crypter l'adresse logique du fichier, la position et la longueur du bloc, ainsi que le contenu du bloc.

2. Procédé selon la revendication 1, caractérisé en ce que le programme de cryptage établit un découpage en N tranches de l'ensemble d'informations comprenant d'une part le bloc de données à authentifier et d'autre part d'autres informations telles que sa taille et sa position, puis il exécute un programme de cryptage prenant en compte le nombre N de tranches.

3. Procédé selon l'une des revendications 1 et 2, caractérisé en ce que le programme de cryptage utilise un algorithme C(D,K) à clé secrète K, qui est exécuté itérativement de la manière suivante :
   - le bloc (B1) d'informations à authentifier est décomposé en tranches de taille déterminée, la tranche de rang n étant désignée par $d_n$;
   - l'algorithme de cryptage C(D,K), est exécuté de manière itérative sur des données qui font intervenir à une étape n la tranche $d_n$ et le résultat $P_{n-1}$ de l'exécution de l'algorithme à l'étape précédente n-1.

4. Procédé selon la revendication 3, caractérisé en ce que, à chaque étape, l'algorithme de cryptage est exécuté sur une donnée qui est une combinaison logique simple, de préférence un OU-Exclusif, de la tranche $d_n$ et du résultat $P_{n-1}$ de l'exécution de l'algorithme à l'étape précédente.

5. Procédé selon l'une des revendications 3 et 4, caractérisé en ce qu'une étape de l'exécution itérative est l'exécution de l'algorithme sur une donnée qui comporte entre autres la longueur du bloc d'informations à authentifier.

6. Procédé selon la revendication 5, caractérisé en ce que à la première étape, l'algorithme de cryptage est exécuté en utilisant comme donnée D à crypter par la clé secrète K les caractéristiques logiques de position et longueur du bloc d'informations, ainsi que l'adresse logique du fichier et éventuellement un nombre aléatoire.

**7.** Procédé selon l'une des revendications précédentes, caractérisé en ce que les données à authentifier sont contenues dans la mémoire d'une carte à mémoire, en ce que l'algorithme de cryptage est effectué par un microprocesseur contenu dans la carte sous le contrôle d'un programme contenu dans une mémoire de la carte, et en ce que le résultat du cryptage est transmis à l'extérieur de la carte.

**8.** Procédé selon la revendication 6, caractérisé en ce que l'algorithme de cryptage utilise une clé secrète contenue dans une mémoire de la carte et dont le contenu ne peut pas être transmis à l'extérieur de la carte.

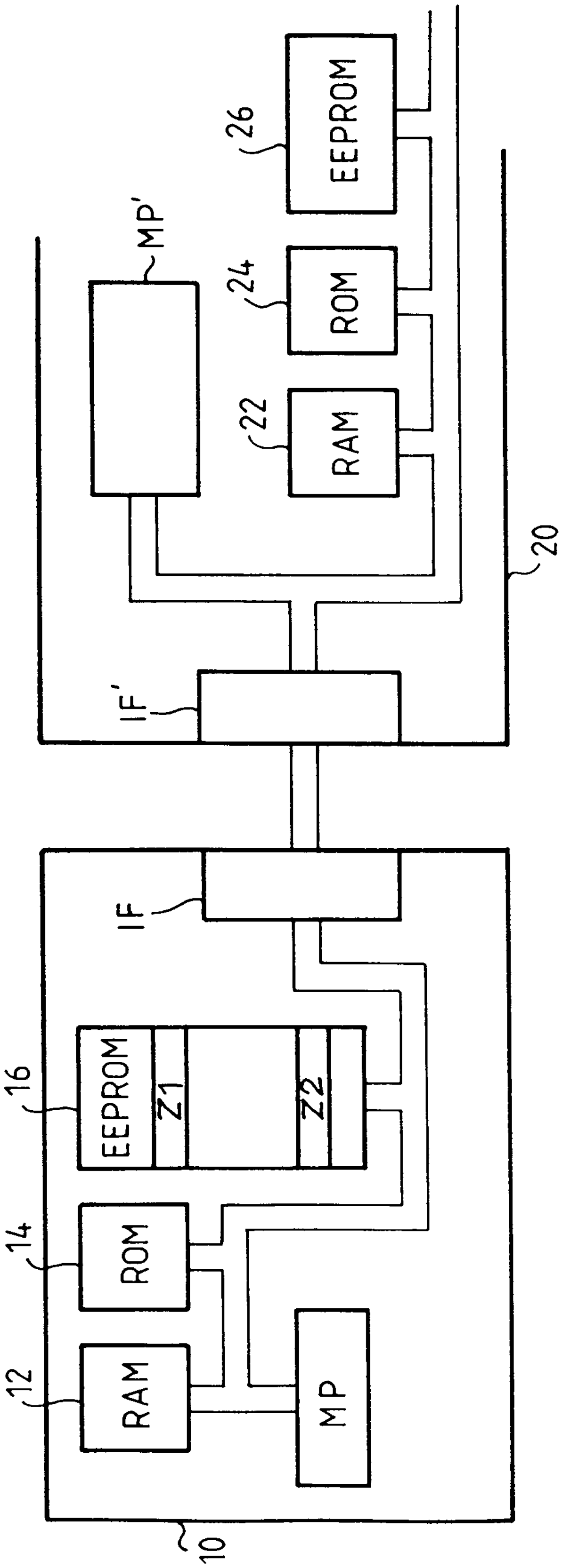
10
12
RAM
14
ROM
16
EEPROM
Z1
Z2
MP
IF
IF'
MP'
20
22
RAM
24
ROM
26
EEPROM

FIG_1

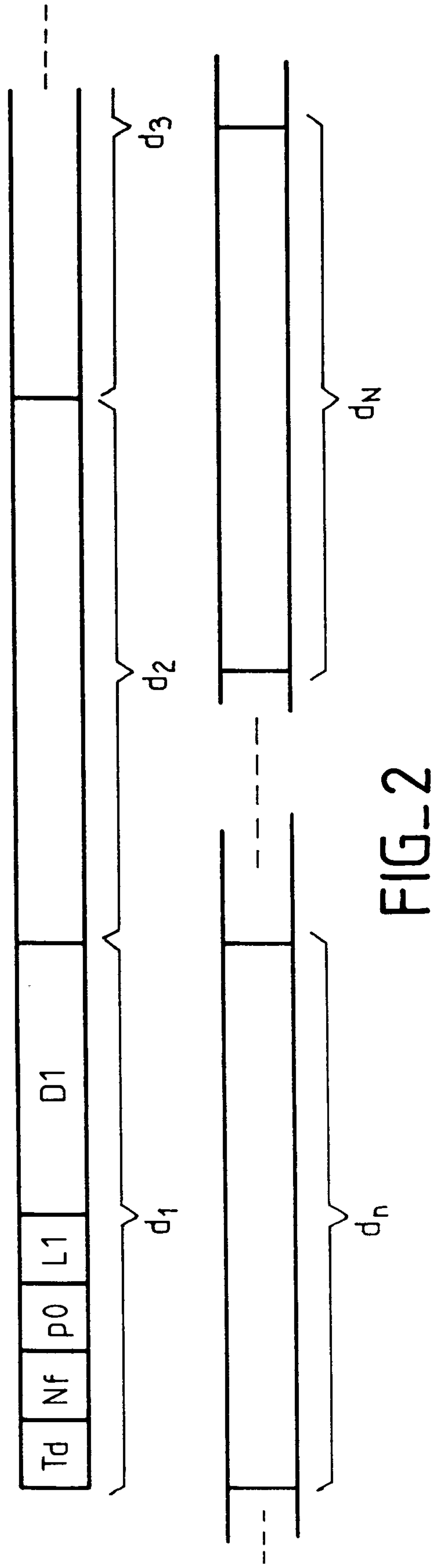
Td
Nf
p0
L1
D1
$d_1$
$d_2$
$d_3$
$d_n$
$d_N$

FIG_2

FIG_3

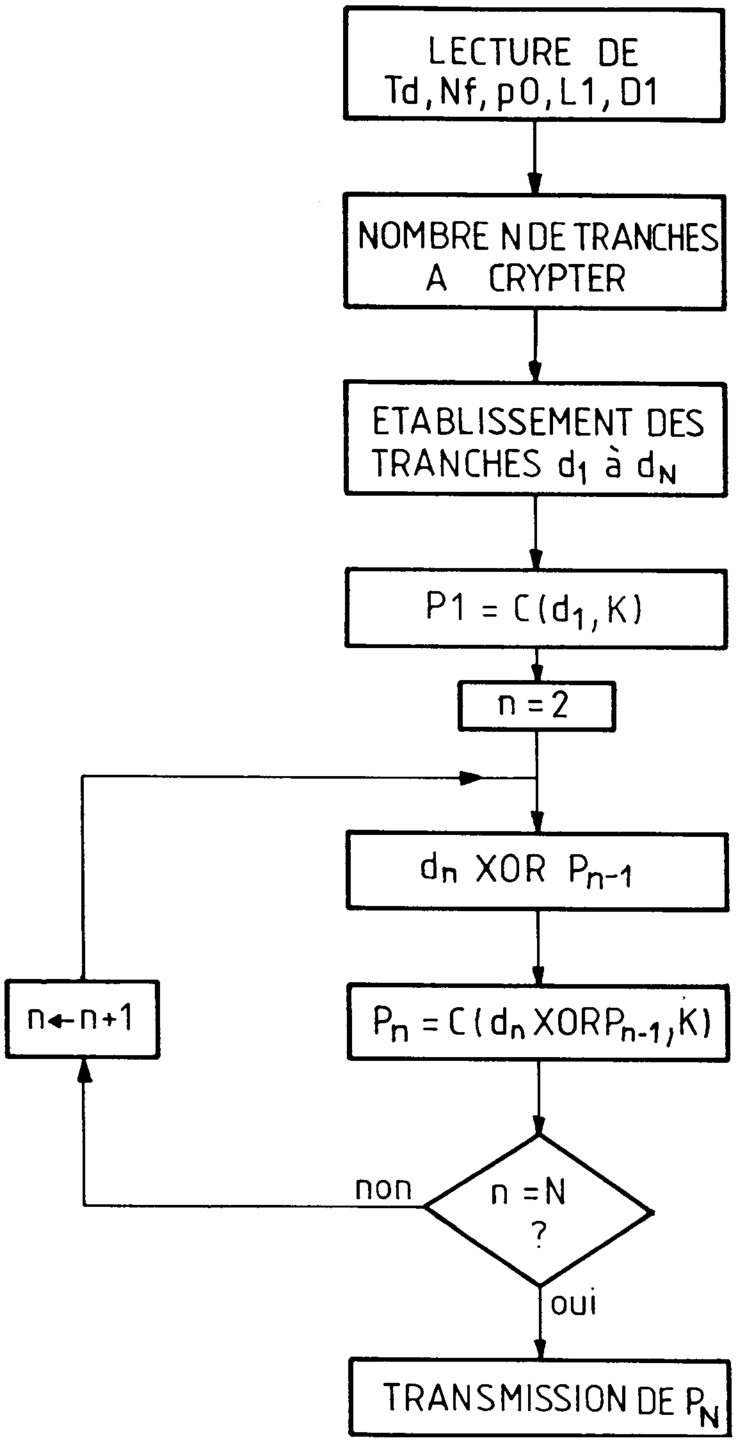
LECTURE DE
Td, Nf, p0, L1, D1
NOMBRE N DE TRANCHES
A CRYPTER
ETABLISSEMENT DES
TRANCHES $d_1$ à $d_N$
$P1 = C(d_1, K)$
$n = 2$
$d_n$ XOR $P_{n-1}$
$P_n = C(d_n XOR P_{n-1}, K)$
$n \leftarrow n+1$
n = N
?
non
oui
TRANSMISSION DE $P_N$

Office européen des brevets

# RAPPORT DE RECHERCHE EUROPEENNE

Numero de la demande

EP 92 40 2368

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | ELECTRONICS.<br>vol. 52, no. 13, 21 Juin 1979, NEW YORK US<br>pages 107 - 120<br>H.J. HINDIN 'LSI-based data encryption discourages the data thief'<br>* page 112, colonne de gauche, alinéa 2 - page 113, colonne de gauche, alinéa 2; figure 6A * | 1-4,7-8 | G06F12/14 |
| A | --- | 5-6 | |
| Y | EP-A-0 284 133 (TELECOMMUNICATIONS RADIOELECTRIQUES ET TELEPHONIQUES + PHILLIPS)<br>* le document en entier * | 1-4,7-8 | |
| A | --- | 5-6 | |
| A | FR-A-2 616 988 (CHAPAT ET AL)<br>* abrégé; revendications *<br>----- | 1-4,7-8 | |
| | | | **DOMAINES TECHNIQUES RECHERCHES (Int. Cl.5 )** |
| | | | G06F<br>G07F |

Le présent rapport a été établi pour toutes les revendications

| Lieu de la recherche | Date d'achèvement de la recherche | Examinateur |
|---|---|---|
| LA HAYE | 29 SEPTEMBRE 1992 | PFITZINGER E.E. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)